# NEUE EUROPÄISCHE PATENTSCHRIFT

(11) **EP 0 804 745 B2**
(45) Veröffentlichungstag und Bekanntmachung des Hinweises auf die Entscheidung über den Einspruch: **14.11.2007**
(45) Hinweis auf die Patenterteilung: 26.01.2000
(21) Anmeldenummer: 95937837.3
(22) Anmeldetag: 24.10.1995
(51) Int. Cl.: G01S 15/60, G01S 13/60, G01C 22/00

(54) **VERFAHREN UND VORRICHTUNG ZUR BERÜHRUNGSLOSEN GESCHWINDIGKEITSMESSUNG AUF OBERFLÄCHEN**
PROCESS AND DEVICE FOR NON-CONTACT MEASUREMENT OF SPEED ON SURFACES
PROCEDE ET DISPOSITIF DE MESURE DE VITESSES SANS CONTACT SUR DES SURFACES

(30) Priorität: 17.01.1995 DE 19501228
(43) Veröffentlichungstag der Anmeldung: 05.11.1997
(73) Patentinhaber: Fraunhofer-Gesellschaft zur Förderung der angewandten Forschung e.V., 80686 München (DE)
(72) Erfinder: WEBER, Norbert, D-91367 Weissenohe (DE); LÜFTNER, Harald, D-91338 Igensdorf (DE); SEITZER, Dieter, D-91054 Erlangen (DE)
(74) Vertreter: Schoppe, Fritz
(86) Internationale Anmeldenummer: PCT/EP1995/004172
(87) Internationale Veröffentlichungsnummer: WO 1996/022549

(56) Entgegenhaltungen:
- EP-A- 0 123 870
- WO-A-80/01418
- WO-A-88/02494
- GB-A- 2 276 055
- JAPANESE JOURNAL OF APPLIED PHYSICS, SUPPLEMENTS, Bd. 29, Nr. 29 - 01, 1.Januar 1990 Seiten 228-230, XP 000266262 HIROYUKI NAKAMURA ET AL 'MEASUREMENT OF ACTUAL VEHICLE SPEED USING ULTRASONIC DOPPLER EFFECT'
- Tietze/Schenk, "Halbleiterschaltungstechnik", 9. Auflage 1991, Springer Verlag, S. 880-885

## Beschreibung

Die vorliegende Erfindung bezieht sich auf ein Verfahren und eine Vorrichtung zur berührungslosen Geschwindigkeitsmessung auf Oberflächen, insbesondere zur Ski-Geschwindigkeitsmessung auf Schneeoberflächen.

Mit der zunehmenden Verbreitung des Skifahrens als Breitensport wächst die Nachfrage nach bestimmten Geräten für diesen Massensport, die eine Aussage über eine erbrachte Leistung ermöglichen. Im allgemeinen ist es für einen Sportler wünschenswert, seine Leistung kontrollieren zu können und hierfür aussagekräftige Daten zur Verfügung zu haben. Insbesondere sind nach Ableistung eines bestimmten Pensums Aussagen über die gefahrene Strecke, über die durchschnittliche Geschwindigkeit, über die höchste gefahrene Geschwindigkeit usw. sowohl für Abfahrtskifahrer als auch für Langläufer von Interesse.

Bisher existieren auf dem Markt keine Systeme, die einem Skifahrer diese Daten bereitstellen. Bekannte Verfahren zur Ski-Geschwindigkeitsmessung weisen eine Vielzahl von Nachteilen auf. Sie sind entweder sehr störanfällig oder ungenau, aufgrund der verwendeten mechanischen Verfahren. Ferner ist es nicht möglich, den notwendigen Geschwindigkeitsbereich vollständig abzudecken.

Für andere Anwendungen der Geschwindigkeitsmessung sind Verfahren nach dem Ultraschall-Doppler-Prinzip bekannt. Bei diesen Verfahren tritt jedoch das Problem der Abhängigkeit der dopplerverschobenen Frequenz vom Winkel zwischen dem Ultraschall-Wandler und der sich am Wandler vorbeibewegenden Oberfläche, deren Geschwindigkeit gemessen werden soll, auf.

Im Stand der Technik wird vorgeschlagen, zur Kompensation dieser Auswirkung eine sogenannte Janus-Anordnung zu verwenden, mit deren Hilfe die Winkelabhängigkeit kompensiert werden kann. Diese Anordnung hat den Nachteil, daß zwei Ultraschall-Wandler notwendig sind, die einen festen Winkel zueinander einschließen. Dies verursacht einerseits höhere Kosten und andererseits treten, vor allem bei einem nach hinten gerichteten Wandler, leichter Verwehungen des Schalls auf. Solche Verwehungen beeinträchtigen eine genaue Messung von höheren Geschwindigkeiten.

Die US-A-4,757,714 offenbart einen Geschwindigkeitssensor und eine auf einem Helm befestigte Datenanzeige. Ein Sender ist an einem Ski befestigt und sendet Ultraschall- oder elektromagnetische Wellen in Richtung des stationären Mediums aus, über das sich ein Skifahrer bewegt. Ein Element des selben Senders oder ein getrennter Wandler erfaßt Wellen, die von dem stationären Medium reflektiert werden. Ein Computer berechnet die Geschwindigkeit der Ski aus der Dopplerverschiebung des reflektierten Signals und aktiviert eine Anzeigeeinheit, um die Geschwindigkeit anzuzeigen.

Aus der GB 2276055 A is eine Vorrichtung zur Geschwindigkeitsmessung bekannt, die einen Sender, der an einem beweglichen Körper angebracht ist und ein Mikrowellensignal aussendet, und einen Empfänger aufweist, der an dem Körper angebracht ist und Reflexionen des gesendeten Mikrowellensignals empfängt. Aus dem gesendeten Signal und dem empfangenen Signal wird ein Dopplersignal ermittelt, das einer digitalen Fourieranalyse unterzogen wird, um die Frequenz zu bestimmen, bei der die Amplitude plötzlich abfällt. Diese Frequenz wird verwendet, um die Geschwindigkeit zu bestimmen.

Es ist die Aufgabe der vorliegenden Erfindung, ein Verfahren und eine Vorrichtung zur berührungslosen Geschwindigkeitsmessung auf Oberflächen, insbesondere zur Ski-Geschwindigkeitsmessung auf Schneeoberflächen, zu schaffen, die eine genaue Messung der Geschwindigkeit über den erforderlichen Geschwindigkeitsbereich ermöglichen, die eine geringe Störanfälligkeit aufweisen, wobei die Vorrichtung auf einfache Art und Weise mit niedrigen Kosten herstellbar ist, und bei denen keine Verwehungen des Schalls auftreten.

Diese Aufgabe wird durch ein Verfahren nach Anspruch 1 und nach Anspruch 2 und durch eine Vorrichtung nach Anspruch 9 und nach Anspruch 10 gelöst.

Ein Vorteil der vorliegenden Erfindung besteht darin, daß gleichzeitig während des Fahrens die dazu benötigte Zeit gemessen werden kann, so daß eine Berechnung der zurückgelegten Strecke möglich ist. Ferner können die erreichten Maximalwerte für die Geschwindigkeit gespeichert werden, und die Durchschnittsgeschwindigkeit kann berechnet werden.

Ein weiterer Vorteil der vorliegenden Erfindung besteht darin, daß eine Kompensation der Winkelabhängigkeit des Dopplereffekts mit nur einem Wandler möglich ist, so daß das System wesentlich kostengünstiger hergestellt werden kann als ein System, das eine Janus-Anordnung von zwei Wandlern aufweist.

Weitere Ausgestaltungen der vorliegenden Erfindung sind in den Unteransprüchen definiert.

Anhand der beiliegenden Zeichnungen werden nachfolgend bevorzugte Ausführungsbeispiele der vorliegenden Erfindung näher erläutert. Es zeigen:
- Fig. 1: eine Darstellung der Anordnung des Ultraschallwandlers und der abgestrahlten und reflektierten Signale;
- Fig. 2: ein Blockdiagramm der Erfassungs- und Ableiteinrichtung gemäß einem Ausführungsbeispiel der vorliegenden Erfindung;
- Fig. 3: ein Blockdiagramm eines weiteren Ausführungsbeispiels der erfindungsgemäßen Vorrichtung; und
- Fig. 4a: und 4b eine Anordnung der erfindungsgemäßen Vorrichtung auf einem Ski.

Messungen nach dem Dopplerprinzip basieren darauf, daß eine diffuse Reflexion eines abgestrahlten Signals, z. B. eines Schallsignals, an der zu messenden Oberfläche auftritt. Diese Reflexion ist dann besonders stark ausgeprägt, wenn die Wellenlänge des Signals in der gleichen Größenordnung ist wie die Rauhigkeit der bestrahlten Oberfläche.

Für Schneeoberflächen ist bei gewalzten Pisten mit einer Auflage von kleinen Brocken mit Durchmessern von einigen Millimetern bis zu wenigen Zentimetern zu rechnen, so daß sich hier beispielsweise der Einsatz von Ultraschall mit Frequenzen von ca. 40 kHz bis 200 kHz optimal eignet.

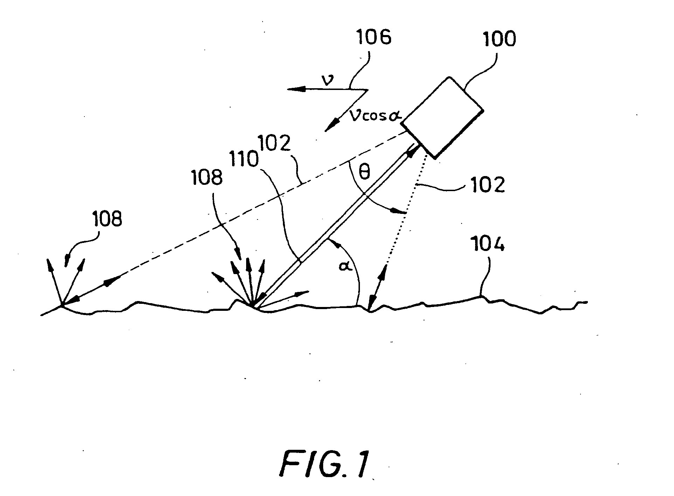

In Fig. 1 sind die Anordnung eines Ultraschallwandlers und die abgestrahlten bzw. reflektierten Signale dargestellt. Der Ultraschallwandler 100 weist eine breite Abstrahlcharakteristik mit einem Öffnungswinkel θ auf. Der Wandler 100 sendet Ultraschallsignale 102 im Bereich seines Öffnungswinkels θ aus. Diese abgestrahlten Signale 102 treffen auf eine rauhe Oberfläche 104 und werden an dieser reflektiert. Abhängig von der winkelmäßigen Einstellung des Wandlers treffen die abgestrahlten Signale 102 unter einem Winkel a auf der Oberfläche 104 auf.

Wie es in Fig. 1 durch den Pfeil 106 dargestellt ist, erfolgt die Abstrahlung des Wandlers 100 in der Fahrtrichtung.

Die auf die rauhe Oberfläche 104 auftreffenden Signale 102 werden an dieser reflektiert. Es handelt sich hierbei um eine diffuse Reflexion des Signals an der Oberfläche 104, wie dies durch das Bezugszeichen 108 dargestellt ist. Ein Teil 110 der reflektierten Signale wird von dem Wandler 100 empfangen.

Zur Durchführung des erfindungsgemäßen Verfahrens ist es zwingend, daß der Wandler 100 eine ausreichend breite Empfindlichkeitscharakteristik aufweist, das heißt, daß der halbe Öffnungswinkel θ/2 des Wandlers größer ist als der Bestrahlungswinkel α, so daß bei der diffusen Reflexion der Signale 102 an der Oberfläche ein Spektralanteil des dopplerverschobenen Signals existiert, der vom Bestrahlungswinkel unabhängig ist. Dies ist der höchste, auftretende Frequenzanteil im Dopplerspektrum. Dieser Frequenzanteil stellt ein direktes Maß für die Geschwindigkeit dar.

Nachdem im vorhergehenden die Voraussetzungen zur Realisierung der vorliegenden Erfindung kurz dargelegt wurden, folgt nun eine Beschreibung des erfindungsgemäßen Verfahrens.

In einem ersten Schritt wird ein Signal 102 mit einer festen Frequenz in Fahrtrichtung und unter einem Bestrahlungswinkel α abgestrahlt, wobei der Bestrahlungswinkel α kleiner ist als ein halber Öffnungswinkel 6/2 des Wandlers 100. Nach dem Empfangen des an der Oberfläche 104 reflektierten Signals 110, das bezüglich des abgestrahlten Signals 102 dopplerverschoben ist, wird der Spektralanteil mit der höchsten Frequenz, der einen vorgegebenen Energiewert übersteigt, aus dem Dopplerspektrum des empfangenen Signals 110 erfaßt und die Geschwindigkeit wird aus der Frequenz des erfaßten Spektralanteils abgeleitet.

Die Erfassung des Spektralanteils und die Ableitung der Geschwindigkeit kann durch eine Mehrzahl von Verfahren durchgeführt werden. Solche Verfahren schließen beispielsweise herkömmliche Spektralanalyseverfahren oder die Fouriertransformation ein.

Nachfolgend wird ein Verfahren gemäß einem bevorzugten Ausführungsbeispiel der vorliegenden Erfindung näher beschrieben.

Die Schritte des Erfassens des Spektralanteils und des Ableitens der Geschwindigkeit umfassen eine Mehrzahl von Teilschritten. In einem ersten Teilschritt wird eine untere Grenzfrequenz eines Hochpaßfilters auf eine Frequenz eingestellt, die größer ist als die Frequenz des abgestrahlten Signals 102, und das empfangene Signal 110 wird durch das Hochpaßfilter gefiltert. Dieses Hochpaßfilter kann gemäß einem Ausführungsbeispiel der vorliegenden Erfindung ein sogenanntes SC-Hochpaßfilter sein (SC-Filter = Schalterkondensatorfilter).

In einem nächsten Schritt wird die Signalleistung am Ausgang des Hochpaßfilters erfaßt und mit einer vorgegebenen Signalleistung verglichen.

In dem Fall, in dem die Signalleistung kleiner ist als die vorgegebene Signalleistung, wird die untere Grenzfrequenz des Hochpaßfilters um einen vorbestimmten Wert erniedrigt und die Schritte des Filterns, Erfassens und Vergleichens werden wiederholt.

Für den Fall, daß die Signalleistung größer oder gleich der vorgegebenen Signalleistung ist, wird die eingestellte untere Grenzfrequenz des Hochpaßfilters ausgegeben, und diese wird in eine Größe umgewandelt, die die Geschwindigkeit darstellt.

Durch die ständige Bewegung des Skis tritt eine Schwankung des Abstandes zwischen dem Wandler 100 und der Schneeoberfläche auf.

Gemäß einem weiteren Ausführungsbeispiel können diese Schwankungen nach dem Hochpaßfiltern des empfangenen Signals 102 durch Verstärken des gefilterten Signals mittels eines Verstärkers mit automatischer Verstärkungsregelung ausgeglichen werden.

Unabhängig davon, welche Art der Erfassung des Spektralanteils gewählt wird, kann vor dem Schritt des Erfassens dieses Spektralanteils das empfangene Signal 110 in das Basisband hinuntergemischt und das empfangene Signal 110 kann durch ein geschwindigkeitsabhängiges Verstärken derart gewichtet werden, daß beim Erfassen des Spektralanteils immer Signale anliegen, die im wesentlichen den gleichen Pegel aufweisen.

Nach der Ableitung der Geschwindigkeit wird diese auf einer Anzeigevorrichtung angezeigt. Die Schritte des Erfassens des Spektralanteils, des Ableitens der Geschwindigkeit und des Anzeigens dieser Geschwindigkeit können an einem Ort erfolgen, der von dem Wandler 100 beabstandet ist. Die zur Geschwindigkeitsmessung erforderlichen Daten können beispielsweise mittels einer elektromagnetischen Übertragung an eine getrennt angeordnete Einheit vermittelt werden, die sich am Handgelenk oder als Head-Up-Display im Helm des Skifahrers befindet.

Wenn eine solche entfernte Anordnung nicht erwünscht ist, können auch Anzeigeeinheiten verwendet werden, die direkt auf dem Ski angebracht sind.

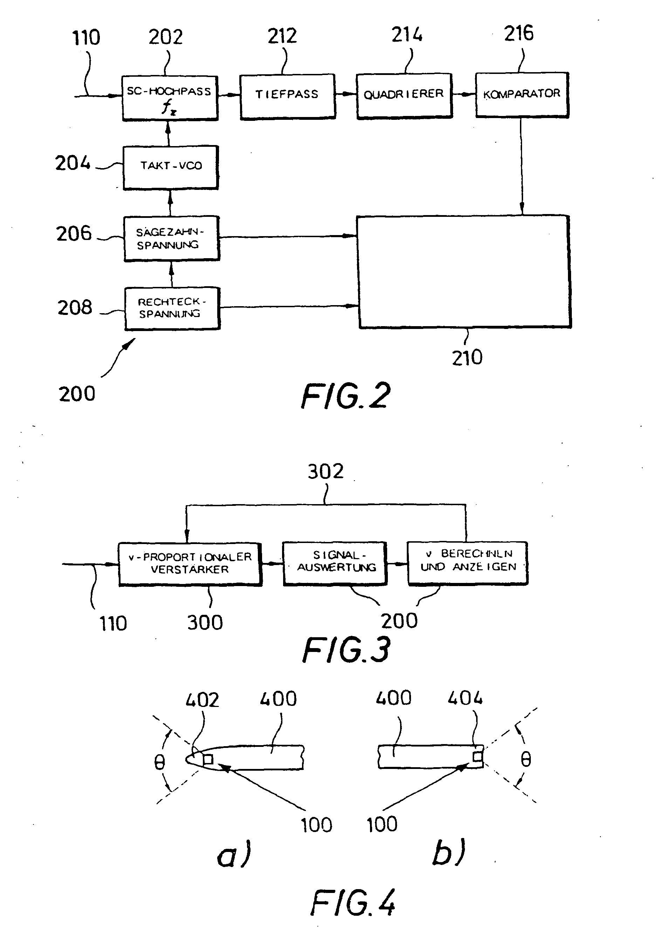

Anhand der Fig. 2 wird nun ein Blockdiagramm einer Erfassungs- und Ableiteinrichtung gemäß einem bevorzugten Ausführungsbeispiel der vorliegenden Erfindung näher beschrieben.

Die in Fig. 2 dargestellte Erfassungs- und Ableiteinrichtung, die in ihrer Gesamtheit mit dem Bezugszeichen 200 bezeichnet ist, dient dazu, den Spektralanteil mit der höchsten Frequenz, der einen vorgegebenen Energiewert übersteigt, aus dem Dopplerspektrum des empfangenen Signals 110 zu erfassen, und die Geschwindigkeit aus der Frequenz des empfangenen Spektralanteils abzuleiten.

Die Einrichtung 200 umfaßt ein sogenanntes SC-Hochpaßfilter 202 (SC-Filter = Schalterkondensatorfilter). Dieses Hochpaßfilter 202 weist eine untere Grenzfrequenz fₓ auf, die einstellbar ist. Die Einstellung der unteren Grenzfrequenz erfolgt über einen spannungsgesteuerten Taktoszillator 204, dessen Spannung durch einen Sägezahnspannungsgenerator 206 und einen Rechteckspannungsgenerator 208 gesteuert wird. Die Generatoren 206 und 208 legen ihre Spannungen ebenfalls an eine Umwandlungs- und Anzeigeeinheit 210 an.

An das Hochpaßfilter 202 wird das empfangene Signale 110 angelegt und das am Ausgang des Hochpaßfilters 202 anliegende Signal wird über ein Tiefpaßfilter 212 und über eine Quadriererschaltung 214 an einen Eingang einer Komparatorschaltung 216 angelegt.

Der Komparator 216 vergleicht die an seinem Eingang anliegende Signalleistung mit einer vorgegebenen Signalleistung. Sobald die anliegende Signalleistung die vorgegebene Signalleistung überschreitet, schaltet der Komparator 216 und die Umwandlungs- und Anzeigeeinheit 210 wandelt die am Hochpaßfilter 202 eingestellte Grenzfrequenz fₓ in die Geschwindigkeit um und zeigt diese an.

Die Erfassungs- und Ableiteinrichtung 200 kann zusätzlich einen sogenannten Verstärker mit automatischer Verstärkungsregelung einschließen (in Fig. 2 nicht dargestellt), der zwischen das Hochpaßfilter 202 und das Tiefpaßfilter 212 geschaltet ist. Dieser Verstärker dient dazu, Schwankungen des Abstandes zwischen dem Wandler und der Oberfläche auszugleichen, die während der Benutzung eines Skis ständig auftreten.

Fig. 3 zeigt ein weiteres Ausführungsbeispiel der erfindungsgemäßen Vorrichtung, bei dem das empfangene Signal 110 in das Basisband hinuntergemischt wurde und an einen geschwindigkeitsabhängigen Verstärker angelegt wird, um das empfangene Signal abhängig von der Geschwindigkeit zu gewichten. Dies stellt sicher, daß an die Erfassungs- und Ableiteinrichtung 200 immer Signale angelegt werden, die im wesentlichen einen gleichen Pegel aufweisen. Die durch die Einrichtung 200 berechnete Geschwindigkeit wird an dem Verstärker 300 zur Gewichtung des nächsten empfangenen Signals über eine Leitung 302 zurückgeführt.

Die oben beschriebene Umwandlungs- und Anzeigeeinheit 210 erfaßt gemäß einem weiteren Ausführungsbeispiel die Fahrzeiten, so daß eine Berechnung der zurückgelegten Strecke möglich ist. Ferner ist eine Speicherung der Maximalgeschwindigkeiten und daraus eine Berechnung der Durchschnittsgeschwindigkeit möglich.

In Fig. 4a ist der vordere Abschnitt eines Skis 400 gezeigt, an dessen Spitze 402 der Wandler 100 angeordnet ist. Ferner ist der Öffnungswinkel θ des Wandlers 100 dargestellt. Der Wandler 100 kann entweder auf der Oberseite des Ski angeordnet sein, so daß ein Loch im Ski vorgesehen sein muß, um eine Abstrahlung des Wandlers 100 nicht zu behindern, oder der Wandler 100 kann unmittelbar an der Unterseite der Skispitze angeordnet sein. Die Erfassungs- und Ableiteinrichtung 200 kann sich auf der Oberseite der Skispitze befinden. Die Erfassungs- und Ableiteinrichtung 200 kann auch entfernt vom Wandler 100 angeordnet sein, sie kann zum Beispiel von dem Skifahrer getragen werden.

Fig. 4b zeigt eine weitere Möglichkeit der Anbringung des Wandlers 100. Hier ist der Wandler 100 am hinteren Teil 404 des Skis 400 angeordnet. Damit der Wandler 100 frei strahlen kann, muß er ganz am Ende des Skis 400 angeordnet sein. Wenn der Ski die meiste Zeit Kontakt zum Boden hat, ist diese Anordnung möglich, da das Problem von Verwehungen des empfangenen Signals hierbei dann nicht auftritt.

Es wird darauf hingewiesen, daß in diesem Fall die Dopplerfrequenz zu niedrigen Frequenzen, verglichen mit der Sendefrequenz, verschoben wird.

In diesem Fall ist jedoch nicht derjenige Spektralanteil mit der höchsten Frequenz, der einen vorgegebenen Energiewert übersteigt, die Grundlage zur Berechnung der Geschwindigkeit, sondern es ist derjenige Spektralanteil mit der niedrigsten Frequenz, der einen vorgegebenen Energiewert übersteigt.

Dies bedeutet für das oben beschriebene Ausführungsbeispiel, daß anstelle eines Hochpaßfilters ein Tiefpaßfilter verwendet wird. Dessen Grenzfrequenz wird auf eine Frequenz eingestellt, die niedriger ist als die Frequenz des abgestrahlten Signals. Die am Ausgang des Filters 202 anliegende Signalleistung wird mit einer vorgegebenen Signalleistung verglichen. Falls die Signalleistung kleiner ist als die vorgegebene Signalleistung, wird die obere Grenzfrequenz des Filters 202 um einen vorbestimmten Wert erhöht und die vorangegangenen Schritte werden wiederholt. Falls die Signalleistung größer oder gleich der vorgegebenen Signalleistung ist, wird die eingestellte obere Grenzfrequenz des Filters 202 ausgegeben und in eine Größe umgewandelt, die die Geschwindigkeit darstellt.

Alle im vorhergehenden, mit Bezug auf einen Wandler 100, der in Fahrtrichtung abstrahlt, gemachten Ausführungen gelten auf gleiche Weise für den Wandler 100 aus Fig. 4b, der entgegengesetzt der Fahrtrichtung abstrahlt.

Obwohl die oben beschriebenen Ausführungsbeispiele im Zusammenhang mit einem Ultraschallwandler beschrieben wurden, ist es offensichtlich, daß abhängig von der Oberfläche auch andere Einrichtungen zu der Erzeugung von Signalen und zum Aufnehmen von reflektierten Signalen, die dopplerverschoben sind, geeignet sind.

Es wird darauf hingewiesen, daß die vorliegende Erfindung nicht auf die Verwendung eines Hochpaßfilters oder Tiefpaßfilters zum Erfassen der interessierenden Spektralanteile des Dopplerspektrums des empfangenen Signals beschränkt ist. Die Verwendung eines Bandpaßfilters mit einer Einstellung der entsprechenden Grenzfrequenz bzw. Mittenfrequenz ist ebenfalls möglich.

Es wird darauf hingewiesen, daß es zur Ausführung des erfindungsgemäßen Verfahrens oder der erfindungsgemäßen Vorrichtung erforderlich ist, temperaturstabile und robuste Bauelemente zu verwenden, die die beim Skifahren auftretenden Minustemperaturen und Erschütterungen ohne Schaden überstehen.

## Patentansprüche

1. Verfahren zur berührungslosen Geschwindigkeitsmessung auf Oberflächen, insbesondere zur Ski-Geschwindigkeitsmessung auf Schneeoberflächen mit folgenden Verfahrensschritten:
a) Abstrahlen eines Signals (102) mit einer festen Frequenz in Fahrtrichtung (106) unter einem Bestrahlungswinkel (α);
b) Empfangen eines an der Oberfläche (104) reflektierten Signals (110), das bezüglich des abgestrahlten Signals (102) dopplerverschoben ist;
c) Erfassen des Spektralanteils mit der höchsten Frequenz, der einen vorgegebenen Energiewert übersteigt, aus dem Dopplerspektrum des empfangenen Signals (110); und
d) Ableiten der Geschwindigkeit aus der Frequenz des erfaßten Spektralanteils,
**dadurch gekennzeichnet, dass** der Bestrahlungswinkel (α) kleiner ist als ein halber Öffnungswinkel (θ/2) einer das Signal (102) abstrahlenden Einrichtung (100), und
dass das Erfassen des Spektralanteils und das Ableiten der Geschwindigkeit folgende Schritte umfaßt:
c1) Einstellen einer unteren Grenzfrequenz (fx) eines Hochpaßfilters auf eine Frequenz, die größer ist als die Frequenz des abgestrahlten Signals (102);
c2) Hochpaßfiltern des empfangenen Signals (110);
c3) Erfassen der Signalleistung am Ausgang des Hochpaßfilters (202); und
c4) Vergleichen der Signalleistung mit einer vorgegebenen Signalleistung;
c4.1) falls die Signalleistung kleiner ist als die vorgegebene Signalleistung:
c4.1.1) Erniedrigen der unteren Grenzfrequenz (fx) des Hochpaßfilters (202) um einen vorbestimmten Wert; und
c4.1.2) Wiederholen der Schritte c2) bis c4);
c4.2) Falls die Signalleistung größer oder gleich der gegebenen Signalleistung ist
c4.2.1) Ausgeben der eingestellten unteren Grenzfrequenz (fx) des Hochpaßfilters (202); und
c4.2.2) Umwandeln der ausgegebenen unteren Grenzfrequenz (fx) in eine Größe, die die Geschwindigkeit darstellt.

2. Verfahren zur berührungslosen Geschwindigkeitsmessung auf Oberflächen, insbesondere zur Ski-Geschwindigkeitsmessung auf Schneeoberflächen mit folgenden Verfahrensschritten:
a) Abstrahlen eines Signals (102) mit einer festen Frequenz entgegen der Fahrtrichtung unter einem Bestrahlungswinkel (α);
b) Empfangen eines an der Oberfläche (104) reflektierten Signals (110), das bezüglich des abgestrahlten Signals (102) dopplerverschoben ist;
c) Erfassen des Spektralanteils mit der niedrigsten Frequenz, der einen vorgegebenen Energiewert übersteigt, aus dem Dopplerspektrum des empfangenen Signals; und
d) Ableiten der Geschwindigkeit aus der Frequenz des erfaßten Spektralanteils,
**dadurch gekennzeichnet, dass** der Bestrahlungswinkel (α) kleiner ist als ein halber Öffnungswinkel (θ/2) einer das Signal abstrahlenden Einrichtung (100), und
dass das Erfassen des Spektralanteils und das Ableiten der Geschwindigkeit folgende Schritte umfaßt:
c1) Einstellen einer oberen Grenzfrequenz (fx) eines Tiefpaßfilters (202) auf eine Frequenz, die kleiner ist als die Frequenz des abgestrahlten Signals (102);
c2) Tiefpaßfiltern des empfangenen Signals (110);
c3) Erfassen der Signalleistung am Ausgang des Tiefpaßfilters (202); und
c4) Vergleichen der Signalleistung mit einer vorgegebenen Signalleistung;
c4.1) falls die Signalleistung kleiner ist als die vorgegebene Signalleistung:
c4.1.1) Erhöhen der oberen Grenzfrequenz (fx) des Tiefpaßfilters (202) um einen vorbestimmten Wert; und
c4.1.2) Wiederholen der Schritte c2) bis c4);
c4.2) falls die Signalleistung größer oder gleich der gegebenen Signalleistung ist:
c4.2.1) Ausgeben der eingestellten oberen Grenzfrequenz (fx) des Tiefpaßfilters (202); und
c4.2.2) Umwandeln der ausgegebenen oberen Grenzfrequenz in eine Größe, die die Geschwindigkeit darstellt

3. Verfahren nach Anspruch 1 oder 2, **gekennzeichnet durch** folgenden Verfahrensschritt vor dem Schritt c2):
Verstärken des empfangenen Signals mittels eines Verstärkers mit automatischer Verstärkungsregelung, um Schwankungen des Abstandes zwischen der das Signal abstrahlenden Einrichtung (100) und der Oberfläche (104) auszugleichen.

4. Verfahren nach Anspruch 1, 2 oder 3, **dadurch gekennzeichnet,**
**daß** das Hochpaßfilter (202) oder das Tiefpaßfilter durch ein Schatterkondensatorfilter gebildet ist.

5. Verfahren nach einem der Ansprüche 1 bis 4, **gekennzeichnet durch** folgende Verfahrensschritte vor dem Schritt c):
- Abwärtsmischen des empfangenen Signals (110) in das Basisband; und
- Gewichten des empfangenen Signals (110) mittels einer geschwindigkeitsabhängigen Verstärkung (300), so daß zur Erfassung des Spektralanteils immer Signale mit den wesentlichen gleichen Pegeln bereitgestellt werden.

6. Verfahren nach einem der Ansprüche 1 bis 5, **gekennzeichnet durch** folgenden Verfahrensschritt:
e) Anzeigen der gemessenen Geschwindigkeit auf einer Anzeigevorrichtung (210).

7. Verfahren nach Anspruch 6, **dadurch gekennzeichnet,**
**daß** der Schritt e) an einem Ort erfolgt, der von der das Signal abstrahlenden Einrichtung (100) entfernt ist.

8. Verfahren nach einem der Ansprüche 1 bis 7, **dadurch gekennzeichnet,**
**daß** das abgestrahlte Signal (102) ein Ultraschallsignal ist; und
**daß** die das Signal abstrahlende Einrichtung (100) ein Ultraschallwandler ist.

9. Vorrichtung zur berührungslosen Geschwindigkeitsmessung auf Oberflächen, insbesondere zur Ski-Geschwindigkeitsmessung auf Schneeoberflächen, die folgende Merkmale aufweist:
eine Einrichtung (100) zum Abstrahlen eines Signals (102) mit fester Frequenz in Fahrtrichtung unter einem Bestrahlungswinkel (α), und zum Empfangen eines an der Oberfläche (104) reflektierten, dopplerverschobenen Signals (110);
eine Einrichtung (200) zum Erfassen des Spektralanteils mit der höchsten Frequenz, der einen vorgegebenen Energiewert übersteigt, aus dem Dopplerspektrum des empfangenen Signals (110);
eine Einrichtung zum Ableiten der Geschwindigkeit aus der Frequenz des erfaßten Spektralanteils,
**dadurch gekennzeichnet, dass** der Bestrahlungswinkel (α) kleiner ist als ein halber Öffnungswinkel (θ/2) der Einrichtung (100), und
dass die Erfassungs- und Ableiteinrichtung (200) folgende Merkmale aufweist:
ein Hochpaßfilter (202), dessen untere Grenzfrequenz (fx) einstellbar ist, an das das empfangene Signal (110) anlegbar ist, wobei beginnend mit der Grenzfrequenz (fx) die höher ist als die Frequenz des abgestrahlten Signals (102), die Grenzfrequenz (fx) derart erniedrigbar ist, bis eine am Ausgang des Hochpaßfilters (202) anliegende Signalleistung eine vorgegebene Signalleistung übersteigt;
einen Komparator (216), der die Signalleistung mit der vorgegebenen Signalleistung vergleicht;
eine Umwandlungseinrichtung (210) zum Umwandeln einer Frequenz, bei der die Signalleistung am Hochpaßfilterausgang eine gegebene Signalleistung übersteigt, in eine Geschwindigkeit; und
eine Anzeigeeinrichtung (210) zum Anzeigen der Geschwindigkeit.

10. Vorrichtung zur berührungslosen Geschwindigkeitsmessung auf Oberflächen, insbesondere zur Ski-Geschwindigkeitsmessung auf Schneeoberflächen, die folgende Merkmale aufweist:
eine Einrichtung (100) zum Abstrahlen eines Signals (102) mit fester Frequenz entgegen der Fahrtrichtung unter einem Bestrahlungswinkel (α), und zum Empfangen eines an der Oberfläche (104) reflektierten, dopplerverschobenen Signals (110);
eine Einrichtung (200) zum Erfassen des Spektralanteils mit der niedrigsten Frequenz, der einen vorgegebenen Energiewert übersteigt, aus dem Dopplerspektrum des empfangenen Signals (110); und
eine Einrichtung zum Ableiten der Geschwindigkeit aus der Frequenz des erfaßten Spektralanteils,
**dadurch gekennzeichnet, dass** der Bestrahlungswinkel (α) kleiner ist als ein halber Öffnungswinkel (θ/2) der Einrichtung (100), und
dass die Erfassungs- und Ableiteinrichtung (200) folgende Merkmale aufweist:
ein Tiefpaßfilter (202), dessen obere Grenzfrequenz (fx) einstellbar ist, an das das empfangene Signal (110) anlegbar ist, wobei beginnend mit einer Grenzfrequenz (fx), die niedriger ist als die Frequenz des abgestrahlten Signals (102), die Grenzfrequenz (fx) derart erhöhbar ist, bis eine am Ausgang des Tiefpaßfilters (202) anlegende Signalleistung eine vorgegebene Signalleistung übersteigt;
einen Komparator (216), der die Signalleistung mit der vorgegebenen Signalleistung vergleicht;
eine Umwandlungseinrichtung (210) zum Umwandeln einer Frequenz, bei der die Signalleistung am Tiefpaßfilterausgang die gegebene Signalleistung übersteigt, in die Geschwindigkeit; und
eine Anzeigeeinrichtung (210) zum Anzeigen der Geschwindigkeit.

11. Vorrichtung nach Anspruch 9 oder 10, **dadurch gekennzeichnet, dass**
die Grenzfrequenz (fx) des Hochpaßfilters (202) oder des Tiefpaßfilters durch einen spannungsgesteuerten Taktoszillator (204) einstellbar ist, der über einen Sägezahnspannungsgenerator (206) und einen Rechteckspannungsgenerator (208) einstellbar ist, wobei die Generatoren (206, 208) mit der Einheit (210) verbunden sind;
zwischen dem Hochpaßfilter (202) oder Tiefpaßilter und dem Komparator (206) ein Tiefpaßfilter (212) und eine Quadriererschaltung (214) geschaltet sind.

12. Vorrichtung nach Anspruch 9, 10 oder 11, **dadurch gekennzeichnet,**
**daß** der Ausgang des Hochpaßfilters (202) mit einem Eingang eines Verstärkers mit automatischer Verstärkungsregelung verbunden ist, der Schwankungen des Abstands zwischen der Abstrahleinrichtung (100) und der Oberfläche (104) ausgleicht.

13. Vorrichtung nach einem der Ansprüche 9 bis 12, **dadurch gekennzeichnet, daß** das Hochpaßfilter (202) oder Tiefpaßilter durch ein Schalterkondensatorfilter gebildet ist.

14. Vorrichtung nach einem der Ansprüche 9 bis 13, **gekennzeichnet durch**
eine Abwärtsmischereinrichtung zum Mischen des empfangenen Signals (110) in das Basisband; und
einen geschwindigkeitsabhängigen Verstärker (300) zum Gewichten des empfangenen Signals (110), so daß am Eingang der Einrichtung (200) immer Signale mit den wesentlichen gleichen Pegeln anliegen;
wobei die Abwärtsmischereinrichtung und der geschwindigkeitsabhängige Verstärker (300) zwischen die Abstrahleinrichtung und die Einrichtung (200) geschaltet sind.

15. Vorrichtung nach einem der Ansprüche 9 bis 14, **dadurch gekennzeichnet, daß** die Abstrahleinrichtung (100) und die Einrichtung (200) zum Erfassen des Spektralanteils sowie die Einrichtung zum Ableiten der Geschwindigkeit voneinander räumlich beabstandet sind.

16. Vorrichtung nach einem der Ansprüche 9 bis 15, **dadurch gekennzeichnet,**
**daß** die Abstrahleinrichtung (100) ein Ultraschallwandler ist; und
**daß** das abgestrahlte Signal (102) ein Ultraschallsignal ist

17. Vorrichtung nach einem der Ansprüche 9 bis 16, **dadurch gekennzeichnet, daß** die Empfangs- und Ableiteinrichtung (200) eine Berechnung der zurückgelegten Strecke, eine Speicherung der Maximalgeschwindigkeiten, eine Berechnung der Durchschnittsgeschwindigkeit, sowie eine Messung der Fahrzeit ermöglicht.

18. Ski (400), der eine Vorrichtung nach einem der Ansprüche 9 und 11 bis 17 in Rückbezug auf Anspruch 9 aufweist, **dadurch gekennzeichnet,**
**daß** die Abstrahleinrichtung (100) benachbart zu der Skispitze (402) auf der Oberseite des Skis angeordnet ist, wobei in der Skispitze eine Ausnehmung vorgesehen ist, die die Abstrahlung und den Empfang von Signalen in Richtung der Schneeoberfläche ermöglicht; und
**daß** die Erfassungs- und die Ableiteinrichtung (200) entfernt von der Abstrahleinrichtung (100) auf dem Ski (400) angeordnet sind, oder durch einen Benutzer des Ski tragbar sind.

19. Ski (400), der eine Vorrichtung nach einem der Ansprüche 9 und 11 bis 17 in Rückbezug auf Anspruch 9 aufweist, **dadurch gekennzeichnet,**
**daß** die Abstrahleinrichtung (100) benachbart zu der Skispitze (402) auf deren Unterseite angeordnet ist; und
**daß** die Erfassungs- und Ableiteinrichtung (200) entfernt von der Abstrahleinrichtung (100) auf dem Ski (400) angeordnet sind, oder durch einen Benutzer des Ski tragbar sind.

20. Ski (400), der eine Vorrichtung nach einem der Ansprüche 10 und 11 bis 17 in Rückbezug auf Anspruch 10 aufweist, **dadurch gekennzeichnet,**
**daß** die Abstrahleinrichtung (100) auf der Oberseite des Skis (400) an dessen hinterem Ende (404) angeordnet ist; und
**daß** die Erfassungs- und die Ableiteinrichtung (200) entfernt von der Abstrahleinrichtung (100) auf dem Ski (400) angeordnet sind oder durch einen Benutzer des Ski tragbar sind.

## Claims

1. A method for non-contactual speed measurement on surfaces, in particular for skiing speed measurement on snow surfaces, comprising the following method steps:
a) radiating a signal (102) of a fixed frequency in the direction of motion (106) at an irradiation angle (α);
b) receiving a signal (110) reflected at the surface (104) which is Doppler-shifted with respect to the radiated signal (102);
c) detecting the spectral portion with the highest frequency, and which exceeds a specified energy value, from the Doppler spectrum of the received signal (110); and
d) deducing the speed from the frequency of the detected spectral portion,
**characterized in that** the irradiation angle (α) is smaller than a half aperture angle (θ/2) of a means (100) radiating off the signal (102), and
that detecting the spectral portion and deducing the speed comprises the following steps:
c1) setting a lower threshold frequency (fx) of a high-pass filter to a frequency which is greater than the frequency of the radiated signal {102);
c2) high-pass filtering of the received signal {110);
c3) detecting the signal power at the output of the high-pass filter (202); and
c4) comparing the signal power with a specified signal power;
c4.1) if the signal power is smaller than the specified signal power:
c4.1.1) reducing the lower threshold frequency (fx) of the high-pass filter (202) by a predetermined value; and
c4.1.2) repeating the steps c2) to c4);
c4.2) if the signal power is greater than or equal to the specified signal power:
c4.2.1) outputting the lower threshold frequency (fx) which has been set for the high-pass filter (202); and
c4.2.2) converting the lower threshold frequency (fx) which has been output to a quantity representing the speed.

2. A method for non-contactual speed measurement on surfaces, in particular for skiing speed measurement on snow surfaces, comprising the following method steps:
a) radiating a signal (102) of a fixed frequency against the direction of motion at an irradiation angle (α);
b) receiving a signal (110) reflected at the surface (104) which is Doppler-shifted with respect to the radiated signal (102);
c) detecting the spectral portion with the lowest frequency, and which exceeds a specified energy value, from the Doppler spectrum of the received signal; and
d) deducing the speed from the frequency of the detected spectral portion.
**characterized in that** the irradiation angle (α) is smaller than a half aperture angle (θ/2) of a means (100) radiating off the signal, and
that detecting the spectral portion and deducing the speed comprises the following steps:
c1) setting an upper threshold frequency (fx) of a low-pass filter (202) to a frequency which is smaller than the frequency of the radiated signal {102);
c2) low-pass filtering of the received signal (110);
c3) detecting the signal power at the output of the low-pass filter {202); and
c4) comparing the signal power with a specified signal power;
c4.1) if the signal power is smaller than the specified signal power:
c4.1.1) increasing the upper threshold frequency (fx) of the low-pass filter (202) by a predetermined value; and
c4.1.2) repeating the steps c2) to c4);
c4.2) if the signal power is greater than or equal to the specified signal power:
c4.2.1) outputting the upper threshold frequency (fx) which has been set for the low-pass filter (202); and
c4.2.2) converting the upper threshold frequency which has been output to a quantity representing the speed.

3. A method according to claim 1 or 2, **characterized by** the following method step before the step c2):
amplifying the received signal using an amplifier with automatic gain control so as to compensate for the fluctuations in the distance between the means radiating the signal (100) and the surface (104).

4. A method according to claim 1, 2 or 3, **characterized in**
**that** the high-pass filter (202) or the low-pass filter is implemented by means of a switched capacitor filter.

5. A method according to one of the claims 1 to 4, **characterized by** the following method steps before the step c):
- down-converting the received signal (110) to the baseband; and
- weighting the received signal (110) using a speed-dependent amplification {300), so that signals with essentially the same levels are always available for detecting the spectral portion.

6. A method according to one of the claims 1 to 5, **characterized by** the following method step:
e) displaying the measured speed on a display device (210).

7. A method according to claim 6, **characterized in**
**that** step e) occurs at a location which is at a distance from the device (100) radiating the signal.

8. A method according to one of the claims 1 to 7,
**characterized in**
**that** the radiated signal (102) is an ultrasonic signal; and
**that** the means (100) radiating the signal is an ultrasonic transducer.

9. A device for non-contactual speed measurement on surfaces, in particular for skiing speed measurement on snow surfaces, comprising the following features:
a means (100) for radiating a signal (102) of fixed frequency in the direction of motion at an irradiation angle (α) and for receiving a Doppler-shifted signal (110) reflected at the surface (104);
a means (200) for detecting the spectral portion with the highest frequency, and which exceeds a specified energy value, from the Doppler spectrum of the received signal (110);
a means for deducing the speed from the frequency of the detected spectral portion,
**characterized in that** the irradiation angle (α) is smaller than a half aperture angle (θ/2) of the means (100), and
that the detection and deduction means (200) exhibits the following features:
a high-pass filter {202), whose lower threshold frequency (fx) can be set and to which the received signal (110) can be applied, for which, starting at the threshold frequency (fx), which is higher than the frequency of the radiated signal (102), the threshold frequency (fx) can be reduced progressively until a signal power present at the output of the high-pass filter (202) exceeds a specified signal power;
a comparator (216), which compares the signal power with the specified signal power;
a conversion means (210) for converting a frequency at which the signal power at the high-pass filter output exceeds a specified signal power to a speed, and
a display means (210) for displaying the speed.

10. A device for non-contactual speed measurement on surfaces, in particular for skiing speed measurement on snow surfaces, comprising the following features:
a means (100) for radiating a signal (102) of fixed frequency against the direction of motion at an
irradiation angle (α) and for receiving a Doppler-shifted signal (110) reflected at the surface (104);
a means (200) for detecting the spectral portion with the lowest frequency, and which exceeds a specified energy value, from the Doppler spectrum of the received signal (110); and
a means for deducing the speed from the frequency of the detected spectral portion,
**characterized in that** the irradiation angle (α) is smaller than a half aperture angle (θ/2) of the means (100), and
that the detection and deduction means (200) exhibits the following features:
a low-pass filter (202), whose upper threshold frequency (fx) can be set and to which the received signal (110) can be applied, for which, starting at a threshold frequency (fx), which is lower than the frequency of the radiated signal (102), the threshold frequency (fx) can be increased progressively until a signal power present at the output of the low-pass filter (202) exceeds a specified signal power;
a comparator (216), which compares the signal power with the specified signal power;
a conversion means (210) for converting a frequency at which the signal power at the low-pass filter output exceeds the specified signal power to the speed; and
a display means (210) for displaying the speed.

11. A device according to claim 9 or 10, **characterized in that**
the threshold frequency (fx) of the high-pass filter (202) or the low-pass filter can be set by a voltage-controlled timing oscillator {204), which can be set via a sawtooth voltage generator (206) and a square-wave voltage generator (208), the generators (206, 208) being connected to the unit (210).
a low-pass filter (212) and a squaring circuit (214) are circuited between the high-pass filter (202) or low-pass filter and the comparator (206).

12. A device according to claim 9, 10 or 11,
**characterized in**
**that** the output of the high-pass filter (202) is connected to an input of an amplifier with automatic gain control which compensates for fluctuations in the distance between the radiation means (100) and the surface (104).

13. A device according to one of the claims 9 to 12,
**characterized in**
**that** the high-pass filter (202) or low-pass filter takes the form of a switched capacitor filter.

14. A device according to one of the claims 9 to 13,
**characterized by**
a downward-conversion means for transposing the received signal (110) to the baseband; and
a speed-dependent amplifier (300) for weighting the received signal (110) so that signals with essentially the same levels are always present at the input of the means (200);
where the downward-conversion means and the speed-dependent amplifier (300) are circuited between the radiation means and the means {200).

15. A device according to one of the claims 9 to 14,
**characterized in**
**that** the radiation means (100) and the means (200) for detecting the spectral portion and the means for deducing the speed are spatially separated fom one another.

16. A device according to one of the claims 9 to 15,
**characterized in**
**that** the radiation means (100) is an ultrasonic transducer; and
**that** the radiated signal (102) is an ultrasonic signal.

17. A device according to one of the claims 9 to 16,
**characterized in**
**that** the receiving and deduction means (200) makes possible a calculation of the course covered, storage of the maximum speeds, a calculation of the average speed and a measurement of the travel time.

18. A ski (400), which exhibits a device according to one of the claims 9 and 11 to 17 when referring back to claim 9, **characterized in**
**that** the radiation means (100) is located in the neighbourhood of the ski tip (402) on the upper side of the ski, an opening being provided in the ski tip which makes it possible to radiate and receive signals in the direction of the snow surface; and
**that** the detection and deduction means (200) are located at a distance from the radiating means (100) on the ski (400) or may be carried by a user of the ski.

19. A ski (400), which exhibits a device according to one of the claims 9 and 11 to 17 when referring back to claim 9, **characterized in**
**that** the radiation means (100) is located in the neighbourhood of the ski tip (402) on its lower side; and
**that** the detection and deduction means (200) are located at a distance from the radiating means (100) on the ski (400) or may be carried by a user of the ski.

20. A ski (400), which exhibits a device according to one of the claims 10 and 11 to 17 when referring back to claim 10, **characterized in**
**that** the radiation means (100) is located on the upper side of the ski (400) at its rear end (404); and
**that** the detection and deduction means (200) are located at a distance from the radiating means (100) on the ski (400) or may be carried by a user of the ski.

## Revendications

1. Procédé de mesure de vitesses sans contact sur des surfaces, en particulier de mesure de vitesses de ski sur des surfaces de neige, aux étapes suivantes consistant à:
a) rayonner un signal (102) à une fréquence fixe dans le sens du déplacement (106), suivant un angle de rayonnement (α);
b) recevoir un signal (110) réfléchi à la surface (104) qui est à décalage de Doppler par rapport au signal rayonné (102);
c) capter, du spectre Doppler du signal reçu (110), la partie spectrale à la fréquence la plus haute excédant une valeur d'énergie prédéterminée; et
d) dériver la vitesse de la fréquence de la partie spectrale captée,
**caractérisé par le fait que** l'angle de rayonnement (α) est inférieur à un demi-angle d'ouverture (θ/2) d'un moyen (100) rayonnant le signal (102), et
que la saisie de la partie spectrale et la dérivation de la vitesse comprend les étapes suivantes consistant à:
c1) régler une fréquence limite inférieure (fx) d'un filtre passe-haut à une fréquence qui est supérieure à la fréquence du signal rayonné (102);
c2) filtrer passe-haut le signal reçu (110);
c3) saisir la puissance de signal à la sortie du filtre passe-haut (202); et
c4) comparer la puissance de signal avec une puissance de signal prédéterminée;
c4.1) si la puissance de signal est inférieure à la puissance de signal prédéterminée:
c4.1.1) abaisser la fréquence limite inférieure (fx) du filtre passe-haut (202) d'une valeur prédéterminée; et
c4.1.2) répéter les étapes c2) à c4);
c4.2) si la puissance de signal est supérieure ou égale à la puissance de signal déterminée:
c4.2.1) sortir la fréquence limite inférieure réglée (fx) du filtre passe-haut (202); et
c4.2.2) convertir la fréquence limite inférieure sortie (fx) en une grandeur qui représente la vitesse.

2. Procédé de mesure de vitesses sans contact sur des surfaces, en particulier de mesure de vitesses de ski sur des surfaces de neige, aux étapes suivantes consistant à:
a) rayonner un signal (102) à une fréquence fixe dans le sens contraire au déplacement (106), suivant un angle de rayonnement (α);
b) recevoir un signal (110) réfléchi à la surface (104) qui est à décalage de Doppler par rapport au signal rayonné (102);
c) capter, du spectre Doppler du signal reçu (110), la partie spectrale à la fréquence la plus basse excédant une valeur d'énergie prédéterminée; et
d) dériver la vitesse de la fréquence de la partie spectrale captée,
**caractérisé par le fait que** l'angle de rayonnement (α) est inférieur à un demi-angle d'ouverture (θ/2) d'un moyen (100) rayonnant le signal, et
que la saisie de la partie spectrale et la dérivation de la vitesse comprend les étapes suivantes consistant à:
c1) régler une fréquence limite supérieure (fx) d'un filtre passe-bas (202) à une fréquence qui est inférieure à la fréquence du signal rayonné (102);
c2) filtrer passe-bas le signal reçu (110);
c3) saisir la puissance de signal à la sortie du filtre passe-bas (202); et
c4) comparer la puissance de signal avec une puissance de signal prédéterminée;
c4.1) si la puissance de signal est inférieure à la puissance de signal prédéterminée:
c4.1.1) élever la fréquence limite supérieure (fx) du filtre passe-bas (202) d'une valeur prédéterminée; et
c4.1.2) répéter les étapes c2) à c4); c4.2) si la puissance de signal est supérieure ou égale à la puissance de signal déterminée:
c4.2.1) sortir la fréquence limite supérieure réglée (fx) du filtre passe-bas (202); et
c4.2.2) convertir la fréquence limite supérieure sortie (fx) en une grandeur qui représente la vitesse.

3. Procédé suivant la revendication 1 ou 2, **caractérisé par** l'étape de procédé suivante avant l'étape c):
amplifier le signal reçu au moyen d'un amplificateur à réglage d'amplification automatique, pour compenser les variations de la distance entre le moyen (100) rayonnant le signal et la surface (104).

4. Procédé suivant la revendication 1, 2 ou 3, **caractérisé par le fait**
**que** le filtre passe-haut (202) ou le filtre passe-bas est constitué par un filtre à condensateur de commutation.

5. Procédé suivant l'une des revendications 1 à 4, **caractérisé par** les étapes de procédé suivantes avant l'étape c) :
- mélanger en descente le signal reçu (110) à la bande de base ; et
- pondérer le signal reçu (110) à l'aide d'une amplification fonction de la vitesse (300), de sorte que, pour la saisie de la partie spectrale, des signaux à niveaux sensiblement identiques soient toujours disponibles.

6. Procédé suivant l'une des revendications 1 à 5, **caractérisé par** l'étape de procédé suivante consistant à:
e) afficher la vitesse mesurée sur un dispositif d'affichage (210).

7. Procédé suivant la revendication 6, **caractérisé par le fait**
**que** l'étape e) a lieu à un endroit éloigné du moyen (100) rayonnant le signal.

8. Procédé suivant l'une des revendications 1 à 7, **caractérisé par le fait**
**que** le signal rayonné (102) est un signal ultrasonore ; et
**que** le moyen (100) rayonnant le signal est un convertisseur d'ultra-sons.

9. Dispositif de mesure de vitesses sans contact sur des surfaces, en particulier de mesure de vitesses de ski sur des surfaces de neige, présentant les caractéristiques suivantes:
un moyen (100) destiné à rayonner un signal (102) à fréquence fixe dans le sens du déplacement, suivant un angle de rayonnement (α), et à recevoir un signal (110) à décalage Doppler réfléchi à la surface (104);
un moyen (200) destiné à capter, du spectre Doppler du signal reçu (110), la partie spectrale à la fréquence la plus haute excédant une valeur d'énergie prédéterminée;
un moyen destiné à dériver la vitesse de la fréquence de la partie spectrale captée,
**caractérisé par le fait que** l'angle de rayonnement (α) est inférieur à un demi-angle d'ouverture (θ/2) du moyen (100), et
que le moyen de saisie et de dérivation (200) présente les caractéristiques suivantes:
un filtre passe-haut (202) dont la fréquence limite inférieure (fx) est réglable, auquel peut être appliqué le signal reçu (110), la fréquence limite (fx) pouvant être abaissée, en commençant par la fréquence limite (fx) qui est supérieure à la fréquence du signal rayonné (102), jusqu'à ce qu'une puissance de signal présente à la sortie du filtre passe-haut (202) excède une puissance de signal prédéterminée;
un comparateur (216) qui compare la puissance de signal avec la puissance de signal prédéterminée;
un moyen de conversion (210) destiné à convertir une fréquence à laquelle la puissance de signal à la sortie du filtre passe-haut excède une puissance de signal déterminée en une vitesse; et
un moyen d'affichage (210) destiné à afficher la vitesse.

10. Dispositif de mesure de vitesses sans contact sur des surfaces, en particulier de mesure de vitesses de ski sur des surfaces de neige, présentant les caractéristiques suivantes :
un moyen (100) destiné à rayonner un signal (102) à fréquence fixe dans le sens contraire au déplacement, suivant un angle de rayonnement (α), et à recevoir un signal (110) à décalage Doppler réfléchi à la surface (104);
un moyen (200) destiné à capter, du spectre Doppler du signal reçu (110), la partie spectrale à la fréquence la plus basse excédant une valeur d'énergie prédéterminée; et
un moyen destiné à dériver la vitesse de la fréquence de la partie spectrale captée,**caractérisé par le fait que** l'angle de rayonnement (α) est inférieur à un demi-angle d'ouverture (θ/2) du moyen (100), et
que le moyen de saisie et de dérivation (200) présente les caractéristiques suivantes:
un filtre passe-bas (202) dont la fréquence limite supérieure (fx) est réglable, auquel peut être appliqué le signal reçu (110), la fréquence limite (fx) pouvant être élevée, en commençant par la fréquence limite (fx) qui est inférieure à la fréquence du signal rayonné (102), jusqu'à ce qu'une puissance de signal présente à la sortie du filtre passe-bas (202) excède une puissance de signal prédéterminée;
un comparateur (216) qui compare la puissance de signal avec la puissance de signal prédéterminée;
un moyen de conversion (210) destiné à convertir une fréquence à laquelle la puissance de signal à la sortie du filtre passe-bas excède une puissance de signal déterminée en une vitesse; et
un moyen d'affichage (210) destiné à afficher la vitesse.

11. Dispositif suivant la revendication 9 ou 10, **caractérisé par le fait que**
la fréquence limite (fx) du filtre passe-haut (202) ou du filtre passe-bas peut être réglée par un oscillateur rythmé (204) commandé par la tension et réglable par l'intermédiaire d'un générateur de tension en dents de scie (206) et d'un générateur de tension rectangulaire (208), les générateurs (206, 208) étant reliés à l'unité (210);
entre le filtre passe-haut (202) ou le filtre passe-bas et le comparateur (202) sont connectés un filtre passe-bas (212) et un circuit limiteur symétrique (214).

12. Dispositif suivant la revendication 9, 10 ou 11, **caractérisé par le fait**
**que** la sortie du filtre passe-haut (202) est reliée à une entrée d'un amplificateur à réglage d'amplification automatique compensant les variations de la distance entre le moyen de rayonnement (100) et la surface (104).

13. Dispositif suivant l'une des revendications 9 à 12, **caractérisé par le fait**
**que** le filtre passe-haut (202) ou le filtre passe-bas est constitué par un filtre à condensateur de commutation.

14. Dispositif suivant l'une des revendications 9 à 13, **caractérisé par**
un moyen de mélange vers le bas destiné à mélanger le signal reçu (110) à la bande de base; et
un amplificateur (300) fonction de la vitesse destiné à pondérer le signal reçu (110) de sorte qu'à l'entrée du moyen (200) soient toujours présents des signaux à niveaux sensiblement identiques;
le moyen de mélange vers le bas et l'amplificateur (300) fonction de la vitesse étant connectés entre le moyen de rayonnement et le moyen (200).

15. Dispositif suivant l'une des revendications 9 à 14, **caractérisé par le fait**
**que** le moyen de rayonnement (100) et le moyen (200) de saisie de la partie spectrale ainsi que le moyen de dérivation de la vitesse sont spatialement distants l'un de l'autre.

16. Dispositif suivant l'une des revendications 9 à 15, **caractérisé par le fait**
**que** le moyen de rayonnement (100) est un convertisseur d'ultrasons; et
**que** le signal rayonné (102) est un signal ultrasonore.

17. Dispositif suivant l'une des revendications 9 à 16, **caractérisé par le fait**
**que** le moyen de réception et de dérivation (200) permet un calcul de la distance parcourue, une mémorisation des vitesses maximales, un calcul de la vitesse moyenne, ainsi qu'une mesure du temps de déplacement.

18. Ski (400) présentant un dispositif suivant l'une des revendications 9 et 11 à 17, avec renvoi à la revendication 9, **caractérisé par le fait**
**que** le moyen de rayonnement (100) est disposé près de la pointe du ski (402), sur la face supérieure du ski, dans la pointe du ski étant prévu un évidement permettant le rayonnement et la réception de signaux en direction de la surface de neige; et
**que** le moyen de réception et de dérivation (200) est disposé sur le ski (400), distant du moyen de rayonnement (100), ou peut être porté par un utilisateur du ski.

19. Ski (400) présentant un dispositif suivant l'une des revendications 9 et 11 à 17, avec renvoi à la revendication 9, **caractérisé par le fait**
**que** le moyen de rayonnement (100) est disposé près de la pointe du ski (402), sur la face inférieure de celui-ci; et
**que** le dispositif de réception et de dérivation (200) est disposé sur le ski (400), distant du moyen de rayonnement (100), ou peut être porté par un utilisateur du ski.

20. Ski (400) présentant un dispositif suivant l'une des revendications 10 et 11 à 17, avec renvoi à la revendication 10, **caractérisé par le fait**
**que** le moyen de rayonnement (100) est disposé sur la face supérieure du ski (400), à l'extrémité arrière (404) de celui-ci; et
**que** le moyen de réception et de dérivation (200) est disposé sur le ski (400), distant du moyen de rayonnement (100), ou peut être porté par un utilisateur du ski.
